# EUROPÄISCHE PATENTSCHRIFT

(11) **EP 1 512 784 B1**
(45) Veröffentlichungstag und Bekanntmachung des Hinweises auf die Patenterteilung: **08.11.2006**
(21) Anmeldenummer: 03019950.9
(22) Anmeldetag: 02.09.2003
(51) Int. Cl.: D04H 3/04

(54) **Verfahren und Vorrichtung zum Vorlegen und Fixieren von bandförmigen Filamentscharen**
Method and apparatus for laying and fixing bands of rectilinear filaments
Méthode et dispositif pour poser et fixer des bandes de filaments rectilignes

(43) Veröffentlichungstag der Anmeldung: 09.03.2005
(73) Patentinhaber: Karl Mayer Malimo Textilmaschinenfabrik GmbH, 09117 Chemnitz (DE)
(72) Erfinder: Erth, Holger, Dr., 09224 Grüna (DE); Erth, Dieter, 09224 Grüna (DE); Pester, Wolfgang, 09117 Chemnitz (DE); Thieme, Matthias, 09125 Chemnitz (DE); Vettermann, Frank, 09387 Jahnsdorf (DE); Reuchsel, Dietmar, 09127 Chemnitz (DE)
(74) Vertreter: Knoblauch, Andreas

(56) Entgegenhaltungen:
- WO-A-00/14317
- DE-A- 10 021 341
- DE-C- 10 207 317
- DE-U- 20 212 521
- US-A- 4 877 470

## Beschreibung

Die Erfindung betrifft ein Verfahren nach dem Oberbegriff des Anspruchs 1 und eine Vorrichtung nach dem Oberbegriff des Anspruchs 7 zum Vorlegen und Fixieren von bandförmigen Filamentscharen auf zwei parallel zueinander angeordneten Transporteinrichtungen für die Herstellung eines uni- oder multiaxialen Geleges, das aus mindestens einer Schicht in einer Richtung gestreckt ausgerichteter und in einer Ebene nebeneinander angeordneter, bandförmiger, voneinander getrennter Filamentscharenabschnitte besteht.

DE 100 21 341 A1 zeigt ein Verfahren und eine Vorrichtung zur Bildung von vorzugsweise mehrschichtigen Schußfäden-Verlegungen multiaxial orientierter Fadengelege und einen Fadenleger hierfür sowie ein mehrschichtiges Schußfadengelege. Die Schußfäden werden von einer Seite des Fadengeleges zur anderen Seite geführt. Hierzu ist mindestens ein umsteuerbarer Fadenleger vorgesehen, der eine Mehrzahl von Schußfäden führt. Der Fadenleger senkt die Schußfäden am Ende eines Verlegeschrittes hinter den Seitenrand des Geleges ab und übergibt sie nach einer Bewegung zur Einhängestelle des nachfolgenden Verlegeschrittes in einen Übergabekamm. Bei der nachfolgenden Rückbewegung des Fadenlegers werden die Schußfäden vom Übergabekamm abgezogen und immer tiefer in Seitenrand-Einhängenadeln hineingezogen, von denen zwei Reihen vorgesehen sind. Die eine Reihe steht dabei senkrecht, während die andere Reihe zum Übergabekamm hin geneigt ist.

DE 202 12 521 U1 zeigt ein Verfahren zum Verlegen von bandförmigen Filamentscharen auf zwei zueinander parallelen Transporteinrichtungen für die Herstellung eines uni- oder multiaxialen Geleges, das aus mindestens einer Schicht in einer Richtung gestreckt ausgerichteter und in einer Ebene nebeneinander angeordneter, bandförmiger, voneinander getrennter Filamentscharenabschnitte besteht. Die bandförmigen Filamentscharen oder Filamentscharenabschnitte werden an den zu einer Verbindungsstation führenden Transporteinrichtungen in Fixierelementen fixiert. Hierzu werden die Filamentscharen zwischen zwei Klemmbacken geführt, die an einer unteren Klemmplatte und an einer oberen Klemmplatte befestigt sind. Die beiden Klemmplatten weisen dabei nach oben stehende Schenkel auf, an denen die Klemmbacken befestigt sind. Durch eine Verschiebung der oberen Klemmplatte relativ zur unteren Klemmplatte wird die Klemmung bewirkt, indem die beiden Klemmbacken durch die Wirkung einer Feder zusammengedrückt werden. Aus Seite 8, letzter Absatz bis Seite 9, erster Absatz geht hervor, daß man zusätzlich zu jeder Klemmvorrichtung noch eine Nadelreihe anordnen kann. Die Nadelreihe hat die Aufgabe, sicherzustellen, daß die bandförmigen geschlossenen Filamentscharen zwischen den beiden Nadelreihen der beiden Transporteinrichtungen im wesentlichen gassenfrei sind.

Durch die WO 98/44183 ist ein Verfahren ähnlicher Art bekannt. Mehrere Schichten unterschiedlich gerichteter Filamentscharen werden auf ein breites Transportband, das das Gelege einer Verbindungsvorrichtung zuführt, fixierend abgelegt. Hilfsweise können an beiden Seiten des Transportbandes nach oben weisende einzelne Stifte einer einzigen Reihe die Lage des Geleges als Einheit auf dem Transportband sichern. Die in üblicher Weise ausgebreiteten Faserstränge werden zunächst gassenfrei seitlich aneinander gelegt und mittels adhäsiver und/oder kohäsiver Bindemittel in dieser Bandform fixiert und anschließend auf einer Spule gespeichert.

Von diesem Speicher wird das Band mit Hilfe eines Greifers, der sich an einem Legewagen oder Leger befindet, über eine Klemm-Schneid-Vorrichtung und über das Transportband vorlegend geführt.

Nachteilig an dieser Verfahrensweise ist, dass die bandförmigen Filamentscharen während der gesamten Zeit des Aushärtens des Bindemittels in definierter Lage - ohne Berührung mit anderen Teilen oder anderen Filamentscharen - in einem von Gegenständen und Luftwirbeln freien Bereich gespannt gehalten werden müssen. Das ist langwierig und sehr problembehaftet. Bereits geringfügige Entspannungen der Faserschar führen zu bleibenden Wellen an den Filamenten. Die erwartete Armierungsfunktion wird dadurch im hohen Maße negativ beeinträchtigt. Die schließlich auf dem Transportband abgelegten Bandabschnitte werden ausschließlich durch das ausgehärtete Bindemittel fixiert. Die beiderseits am Transportband angebrachten Stifte können die Filamente nicht gespannt halten.

Verwendet man anstelle der Stifte pressende Elemente, die das Gelege mindestens an den Seitenrändern abschnittsweise unter Verwendung des aufgebrachten Bindemittels verdichten, dann muss der verdichtete Rand vor der abschließenden Verwertung in der Regel wegen seiner abweichenden Eigenschaften abgetrennt werden. Ein erheblicher Materialverlust ist die Folge. Im Übrigen erfordern pressenden Elemente eine permanente Reinigung, wenn eine zuverlässige Funktion gewährleistet werden soll. Insgesamt kann das so hergestellte Gelege seiner Zweckbestimmung nicht oder nur mit erheblichem Aufwand gerecht werden.

Mit der DE 100 31 836 A1 wurde ein weiteres Verfahren bekannt. Das Gelege wird - wie in der Praxis üblich - zwischen zwei parallel zueinander angeordneten Transportvorrichtungen gespannt einer Verbindungsvorrichtung, vorzugsweise einer Kettenwirkmaschine, zugeführt. Die in einem vorgeordnetem Arbeitsgang hinsichtlich ihrer Länge abgemessenen und abgetrennten bandförmigen Filamentscharenabschnitte werden zwischen zwei Klemmen verbracht und gemeinsam mit diesen Klemmen an den Transporteinrichtungen gespannt fixiert.

Auch diese Verfahrensweise führte nicht zur Beseitigung der eingangs genannten Mängel. Die zwischen mechanischen Klemmbacken oder in einer erstarrten Schmelze fixierten Filamente unterliegen nicht einheitlichen Klemmbedingungen. Während des Transportes zu den und auch an den Transportketten wirken Kräfte und Schwingungen auf das Gelege ein, die einen großen Teil der Filamente locker und wellig werden lassen. Auch diese für Armierungszwecke benötigten Gelege sind wegen des großen Anteiles der welligen und damit nicht tragfähigen Filamente zu voluminös und zu schwer.

Eine weitere Vorrichtung zur Realisierung des oben beschriebenen Verfahrens offenbart die DE 202 12 521 U1. Auch hier wird das Gelege auf zwei parallel zueinander, zur Verbindungsstation fördernden Transporteinrichtungen zusammengestellt. Der vorher abgemessene und abgetrennte Filamentscharenabschnitt wird mit Hilfe von zwei steuerbaren, lösbaren Klemmen gestreckt von der ortsfesten Schneidvorrichtung über die Fixierelemente der beiden Transporteinrichtungen geführt.

Die Fixierelemente der beiden Transporteinrichtungen bestehen aus je einer Reihe von in Fassungen gehaltenen spitzen Nadeln. Neben den Nadeln befindet sich eine erste horizontale Klemmfläche an der Transporteinrichtung. Außerhalb und unter der genannten Klemmfäche ist eine weitere, vertikale Klemmfäche an der besagten Fassung angebracht. Mit der horizontalen Klemmfäche arbeitet im Bereich jedes Legers und jeder Transportkette ein auslegbarer, steuerbarer Klemmbacken zusammen. Mit der sich entlang der Nadelreihe ersteckenden vertikalen Klemmfäche arbeiten an der Transportkette nebeneinander geführte einzeln mittels Federn belastete, abhebbare kleine Klemmstößel zusammen.

Befindet sich ein vorbereiteter Filamentscharenabschnitt über den Transporteinrichtungen, dann übernehmen die auf der horizontalen Klemmfläche wirksamen eingeschwenkten Klemmbacken das Fixieren der bereits vorher abgelegten Schichten. Die Klemmstößel werden mittels Kulisse aus der Klemmstellung nach außen gebracht und geben die Enden des bereits vorher gelegten Abschnittes frei. Die den neuen Abschnitt führenden Klemmen (sie fungieren als Greifer) senken sich, so dass der neue Abschnitt in die Nadelgassen gedrückt wird. Luftstrahlen und "Schwerter" führen die Enden des Abschnittes vor die senkrechten Klemmflächen. Die Klemmstößel kehren in die Klemmstellung zurück und der bewegliche Klemmbacken löst sich von der horizontalen Klemmfläche. Schließlich wird er wieder in eine Bereitschaftsposition ausgeschwenkt.

Auch diese Arbeitsweise ist unbefriedigend. Der häufige Wechsel der Klemmen führt ebenso wie in den vorgenannten Beispielen zur Lockerung von Filamenten, so dass das schließlich verfügbare, verbundene Gelege der gewünschten Armierungsfunktion nur in ungenügender Weise gerecht werden kann.

Die Aufgabe der vorliegenden Erfindung ist es, ein Verfahren und eine Vorrichtung der eingangs beschriebenen Art vorzuschlagen, die es gestatten, die Fixierung der Enden der Filamentscharenabschnitte an den Transporteinrichtungen - auch beim Aufbringen weiterer Lagen - bis hin zur Verbindungsstation derart aufrecht zu erhalten, dass die Filamente eines Bandes permanent einer die Spannung,erhaltenden Fixierung unterworfen sind. Weiterhin sollen die Enden der Filamentscharenabschnitte nach der Verbindungsstation derart aus den Fixierelementen entfernbar sein, dass letztere ihre Fixierfunktion über lange Zeiträume zuverlässig ausführen können. Die dafür geschaffene Vorrichtung soll zudem einfach und leicht handhabbar sein.

Diese Aufgabe wird durch das in Anspruch 1 definierte Verfahren und mit der in Anspruch 7 definierten Vorrichtung gelöst.

Das Fixieren der Fasern oder Filamente erfolgt durch ein kombiniertes Klemmen. Die durch die Spitzen der Nadeln abgeteilten Stränge werden durch die keilförmigen Spitzenabschnitte in die Spalten zwischen die Schäfte der Nadeln gezogen und dabei verdichtet. Dort unterliegen sie zunächst einer Reibung, die durch das Ausdehnungsbestreben des zusammengepressten Strangabschnittes und durch das Streckungsbestreben der Filamente erzeugt wird.

Eine zusätzliche Reibung, die sog. Seilreibung, wird durch die schlangenförmige Auslenkung der abgeteilten Stränge wirksam, sobald an Filamenten oder Fasern irgendwelche Zugkräfte wirken. Durch diese Kombination wird erreicht, dass nahezu alle Filamente in gleicher Weise in ihrer einmal gewählten Position gehalten werden.

In der Phase des Übergebens der Filamentscharen oder Filamentscharenabschnitte an die Fixierelemente der z. B. Transportketten müssen vorher gelegte Filamentscharenabschnitte nicht vertretungsweise anderen Klemmvorrichtungen überlassen werden. Willkürliche Bewegungen der Filamente zwischen zwei sich gegenseitig ablösenden Klemmvorrichtungen finden nicht statt.

In dem permanent aufrecht erhaltenen Klemm- oder Fixiervorgang sind nahezu alle Filamente einbezogen, so dass ein Lockern der Filamente auch beim Auflegen weiterer Filamentscharen und auch auf dem Weg zur vibrierenden Verbindungsstation (Kettenwirkmaschine) nahezu ausgeschlossen ist.

Eine Zugabe von Bindemitteln zur Unterstützung des Klemmvorganges und des Fixierens kann unterbleiben, so dass sich die Filamente - auf Dauer - nach dem Verlasssen der Verbindungsstation rückstandsfrei entfernen lassen.

All diese genannten Vorteile führen schließlich dazu, dass die überwiegende Zahl der Filamente bis zum Verlassen der Verbindungsstation gestreckt bleiben und ihrer Armierungsfunktion gerecht werden können. Es wird dadurch möglich - bei entsprechender Ausbreitung der Filamentscharenbänder - Gelege mit sehr niedrigen Flächengewichten und einer hohen Zugfestigkeit zu erreichen.

Bei einer Modifizierung des Verfahrens nach Anspruch 2 wird in der Phase des Vorlegens der Filamentscharen die Zahl der notwendigen Klemmen, die für das sichere Halten und Führen der Filamente sorgen, reduziert.

Durch die Merkmale des Verfahrens nach Anspruch 3 erhält man ein multiaxiales Gelege, bei dem die Filamente aller Schichten gleichermaßen gestreckt im Gelegeverbund angeordnet sind.

Das zusätzliche Spannen der Enden der Filamentscharenabschn itte nach Anspruch 4 unterstützt die Klemmwirkung der Fixieretemente vor allem dann, wenn als Verbindungsstation eine Kettenwirkmaschine mit schwingenden Maschenbildungselementen Verwendung findet.

Die Kombination der Magnetbänder mit Stahlbändern nach Anspruch 5 sorgt nicht nur dafür, dass die meist sehr flexiblen Magnetbänder stabilisiert werden. Diese Kombination schafft auch die Grundlagen dafür, dass der Wirkungsgrad der Magnetbänder verbessert werden kann.

Eine deutliche Entlastung der Filamente im Bereich der Fixierelemente an den Transportketten erreicht man durch das Stützen der Filamente zwischen den Fixierelementen der beiden Transporteinrichtungen nach Anspruch 6.

Mit der Vorrichtung nach Anspruch 7 wird nicht nur die Ausführung des Verfahrens nach Anspruch 1 und Anspruch 2 auf einfache und unkomplizierte Art erreicht. Mit ihr ist es u. a. möglich, auch andere Faden- oder Faserelemente zur Herstellung uni- oder multiaxialer Gelege zuverlässig an den Fixierelementen der Transporteinrichtungen einzulegen und zu halten. Das bezieht sich auf reine Fadengelege ebenso, wie auf Gelege aus endlosen Fasersträngen oder auf Gelege aus spleißfähigen Foliebändchen oder entsprechenden Mischformen.

Mit der Gestaltung der Nadeln und ihrer Anordnung nach den Ansprüchen 8 und 9 wurde in Versuchen eine zuverlässige Fixierung, insbes. von Filamentscharen aus Kohlenstoff erreicht.

Durch die Verwendung von auf Stahlbändern befestigten Magnetbändern und entsprechenden Zuführungen auf Klemmfächen an den Transsporteinrichtungen - gemäß Anspruch 10 - wird die Sicherheit des Fixiervorganges erhöht, ohne dass zusätzliche, steuerbare kosten- und wartungsintensive Klemmstößel in großer Zahl an den Transportketten vorgesehen werden müssen.

Die Ausbildung der Klemmfächen der Greifer oder Klemmen nach Anspruch 11 trägt entscheidend dazu bei, dass auch bei größeren Schichtdicken die Mehrzahl der Filamente beim Verlegen und Fixieren gespannt bleiben.

Die Erfindung soll nachstehend an Ausführungsbeisielen erläutert werden. In den dazugehörigen Zeichnungen zeigen:
- Fig. 1: drei unterschiedliche Darstellungen der Grundelemente des neuen Lösungsprinzipes nämlich
a) einen Querschnitt durch die Klemm- und Schneidvorrichtung im Bereich der ihr benachbarten Transporteinrichtung,
b) einen vergrößerten Querschnitt durch die Fixierelemente der Transporteinrichtung und
c) eine Draufsicht auf die Fixierelemente nach b),
- Fig. 2: eine stark vereinfachte, schematische Seitenansicht der Anlage,
- Fig. 3: einen Ausschnitt des Geleges in einer Draufsicht,
- Fig. 4: einen Querschnitt durch die Anlage im Bereich des Legers für eine Schicht in der Ausgangsposition mit einer schematisch dargestellten Zuführeinrichtung für Filamentscharenbänder,
- Fig. 5: einen Querschnitt analog Fig. 4, bei dem der Greifer des Legers die gegenüberliegende Transportkette erreicht hat,
- Fig. 6: einen Querschnitt, bei dem die Filamentscharen in die Fixierelemente abgesenkt wurde,
- Fig.7: einen Querschnitt, bei dem der Filamentscharenabschnitt frei gegeben und abgetrennt wird,
- Fig. 8: einen Querschnitt, bei dem die Einlegeprofile angehoben und der Greifer des Legers in seine Ausgangsposition zurückgeführt wurde,
- Fig. 9: einen Querschnitt, bei dem die Fixierung der Filament-scharabschnitte durch von oben zugeführte Magnetbänder unterstützt wird,
- Fig. 10 a, b: einen Querschnitt durch die Klemmflächen eines besonders ausgestalteten Greifers in zwei unterschiedlichen Klemmphasen,
- Fig. 11 a, b: einen Querschitt durch ein besonders gestaltetes Einlegeprofil in zwei verschiedenen Klemmphasen,
- Fig. 12: eine Klemmvorrichtung einer Klemm-Schneid-Vorrichtung mit ihren Antriebselementen,
- Fig. 13: eine Schneidvorrichtung in einer ersten perspektivischen Darstellung von vorn und
- Fig. 14: in einer zweiten perspektivischen Darstellung von hinten.

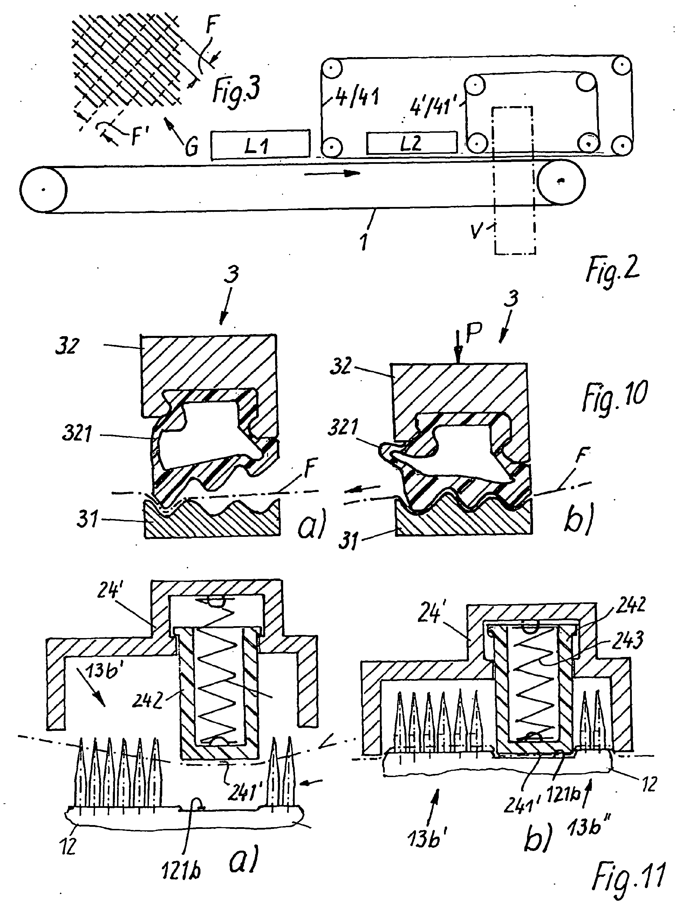

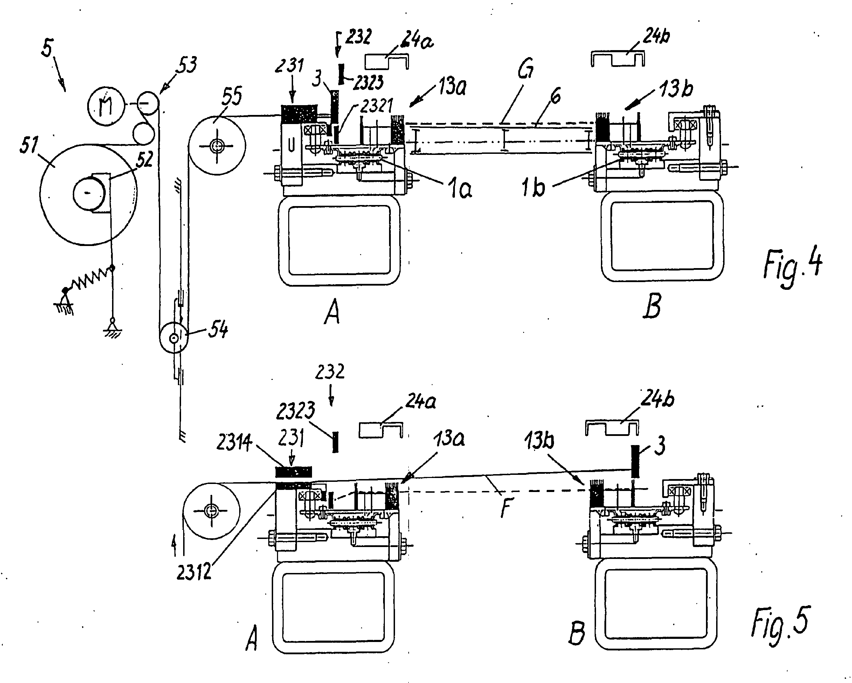

Die Erfindung wird anhand einer Legevorrichtung beschrieben, die ein multiaxiales Gelege G vorbereitet, das an einer Kettenwirkmaschine als Verbindungsstation V für eine spätere Weiterverarbeitung vorverfestigt wird (Fig. 2). Das Gelege G besteht in dem Beispiel nach Fig. 3 aus zwei übereinander angeordneten Schichten G1, G2 aus Filamentscharenbändern F. Die Richtung der Filamentscharenbänder F ist für eine der beiden Schichten diagonal und entgegengesetzt zur anderen Schicht gewählt.

Für das Zusammenstellen des Geleges G sind zwei Transporteinrichtungen A, B (Fig. 4) vorgesehen. Die Basis dieser Transporteinrichtungen A, B sind die oberen Trume von an sich bekannten Transportketten 1a, 1b. Diese Trume der Transportketten 1a, 1b werden an entsprechenden gestellfesten Führungselementen 21 zur Wirkstelle der Kettenwirkmaschine geführt. Für die seitliche Führung der Transportketten 1a, 1b in Spannrichtung sorgt eine Stützschiene 22 in Verbindung mit entsprechenden Stützrollen 14 an der Transportkette 1a, 1b.

An der Oberseite der Transportkette 1a (oberes Trum) befinden sich segmentartige Grundplatten 11, an denen einerseits die bereits erwähnten Stützrollen 14 und andererseits die Fassungen 12 für die Fixierelemente 13, 13a, 13b befestigt sind. Neben den Fixierelementen 13a, 13b sind im Bereich der Oberkante der Fassungen nach oben gerichtete Klemmflächen 121a, 121b vorgesehen.

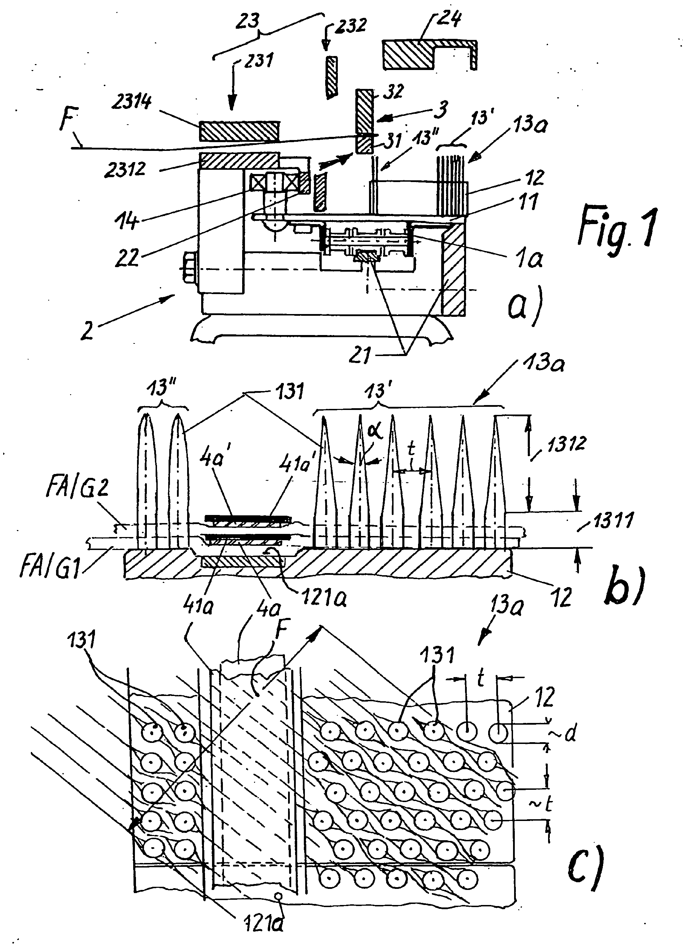

Die Fixierelemente 13 (a oder b) bestehen aus zwei Gruppen 13', 13" von Nadelreihen. Die Nadeln 131 der Gruppen 13', 13" sind mit der Verlängerung ihrer Schäfte 1311 in den Fassungen 12 derart befestigt, dass ihre Spitzen senkrecht nach oben weisen. Die Nadeln 131 haben zwischen ihren Spitzen und den Schäften 1311 kegelige oder kegelähnliche (Vgl. Fig. 1, Bild b, Nadelreihen 13") Spitzenabschnitte 1312.

Der Kegelwinkel a sollte mindestens in den Übergangsbereichen zu den Schäften kleiner sein als 6°. Im oberen Bereich können diese Winkel zur Vermeidung zu langer Spitzenabschnitte 1312 deutlich größer gewählt werden. Der mittlere Teilungsabstand t der Nadeln 131 in der Nadelreihe und in den Nadelreihen untereinander beträgt etwa 0,7 mm - 1,5 mm, vorzugsweise 1,0 mm. Der Schaftdurchmesser d der Nadeln 131 wird vorzugsweise zwischen 55 % und 75 % des Teilungsabstandes t festgelegt.

Die Spitzen der Nadeln 131 sollen geeignet sein, die Filamente der Filamentscharen F in einzelne Stränge aufzuteilen, ohne dabei einzelne Filamente zu zerstören. Die kegeligen oder kegelähnlichen Spitzenabschnitte 1312 sollen die abgeteilten Stränge zuverlässig derart seitlich auslenken, dass sie mindestens abschnittsweise schlangenförmig in den Spalten zwischen den Schäften 1311 verdichtend geführt werden und sich bei üblichen Schwingungen nicht wieder nach oben bewegen. (Vgl. hierzu die Bilder b) und c) der Fig. 1.)

Durch das Klemmen der Stränge in den Spalten zwischen den Schäften 1311 wird eine bestimmte Grundklemmkraft erzeugt, die dann durch die verschiedenen Umschlingungen nach dem bekannten Gesetz der Seilreibung (S1 = S2 * e^{µα}) deutlich erhöht wird. Die so erzeugte Rückhaltekraft wirkt an allen Filamenten in etwa gleicher Weise, so dass ein Lockern einzelner Filamente nahezu vollständig ausgeschlossen werden kann.

In Fig. 1, Bild a) wird die Filamentschar F von links kommend zunächst der Klemm-Schneid-Vorrichtung 23 zugeführt. Dabei durchquert die Filamentschar F zunächst die Klemme 231 zwischen der festen Klemmplatte 2312 und dem beweglichen Klemmkörper 2314. Der auch zwischen den Schneiden 2321 und 2323 der Schneideinrichtung 232 bewegbare Greifer 3 des Legers (nicht dargestellt) klemmt das vordere Ende des Filamentscharenbandes F mit seinen Klemmbacken 31, 32 und zieht es zunächst über die Fixierelemente 13a der Transporteinrichtung A und dann zur gegenüberliegenden Transporteinrichtung B über die Fixierelemente 13b. (Vergleiche hierzu auch die Figuren 4 und 5.)

Das Einlegeprofil 24 befindet sich in der oberen Bereitschaftsstellung. Das an seiner Unterseite ausgeführte Profil umgreift im freien Abstand die Gruppen 13' bzw 13" von Nadeln 131 und kann sich der Klemmfläche 121 nähern oder sich kraftschlüssig auf diese auflegen.

Aus Fig. 1, Bild b) ist neben der Gestaltung und Anordnung der Nadeln 131 auch zu erkennen, dass zu einem späteren Zeitpunkt auf die Klemmfläche 121 zunächst ein Magnetband 4a auf die Schicht G1 aufgelegt wird. Das Magnetband 4a ist zum Zwecke der Stabilisierung an ein flexibles Stahlband 41 a kaschiert. Die Magnetkraft dieses Magnetbandes 4a, 4b beträgt mindestens 0,4 N/cm² vorzugsweise jedoch mehr als 0,65 N/cm² und sorgt für eine zusätzliche Klemmkraft, die dann durch die Klemmkräfte zwischen den Nadelschäften 1311 ergänzt und durch die Seilreibung zwischen den Nadeln 131 nach der gen. Seilreibungsformel weiter vergrößert wird. Nach dem Auflegen einer weiteren Schicht G2 sorgt das Magnetband 4a' in Verbindung mit seinem Stahlband 41a' für eine analoge Wirkung. Das Magnetband (4, 4') ist gegenwärtig bei den angegebenen Magnetkräften etwa 1,5 mm dick.

Die Dicke des Stahlbandes 41, 41' ist nicht exakt vorzuschreiben. Sie soll eine gewisse mechanische Stabilität der Führung des meist elastischen Magnetbandes 4 gewährleisten und zudem eine ausreichende Stabilität des magnetischen Verbundes ermöglichen. Zweckmäßig ist eine Dicke des Stahlbandes 41 von ca 0,1 mm.

Der Verbund aus Stahl- und Magnetband 4/41 bzw. 4'/41' wird unmittelbar im Anschluss an den Legebereich L1 bzw. L2 von oben an die Klemmflächen 121 herangeführt. Er verbleibt dort bis hinter die Verbindungsstation V und wird über entsprechende Führungsrollen in einem endlosen Kreislauf zurückgeführt (Fig. 2)

Der Verfahrensablauf der beschriebenen Vorrichtungen und Arbeitselemente wird nachfolgend in chronologischer Folge anhand der Figuren 4 bis 9 beschrieben.

Die in flacher, ausgebreiteter Form von der Spule 51 abgezogenen Filamentscharenbänder F werden in Gruppen seitlich aneinander gefügt und zu einem Band mit einer Breite von etwa 5 cm zusammengestellt. Das Lieferwerk 53 bestimmt über den Motor die kontinuierliche Abzugsgeschwindigkeit. Beim Abbremsen der Maschine sorgt die Bremse 52 für ein entspechendes Verzögern der Spule 51. Die gewichts- oder federbelastete Speicherrolle 54 sorgt für die definierte Zwischenspeicherung des zwischenzeitlich vorhandenen Bandüberschusses, der durch den diskontinuierlichen Verbrauch am Leger (Greifer 3) verursacht wird. Die Führungsrolle 55 führt schließlich das aus mehreren Filamentscharenbändchen bestehende Filamentscharenband F in die Legeebene.

In Fig. 4 sehen wir links die Transporteinrichtung A mit der Klemm-Schneid-Vorrichtung 23 sowie das obere Trum der Transportkette 1a mit ihren Fixierelementen 13a und auf der rechten Seite die Transporteinrichtung B mit dem oberen Trum der Transportkette 1b und ihren Fixierelementen 13b.

Zwischen den Fixierelementen 13a und 13b ist ein endloses Stützband 6 vorgesehen, das die horizontale Lage des Geleges G sichert und damit die notwendigen Rückhaltekräfte im Bereich der Fixierelemente 13a, 13b deutlich reduziert. Die Einlegeprofile 24a, 24b befinden sich in Bereitschaftstellung. Der Greifer 3 hat das vordere Ende des Filamentscharenbandes F erfasst und befindet sich noch zwischen den Schneiden 2321 und 2323 der Schneideinrichtung 232.

In Fig. 5 hat sich der Greifer 3 über die Fixierelemente 13a, über das Gelege G und über die Fixierelemente 13b der Transporteinrichtung B bewegt. Die Klemme 231 ist dabei geöffnet.

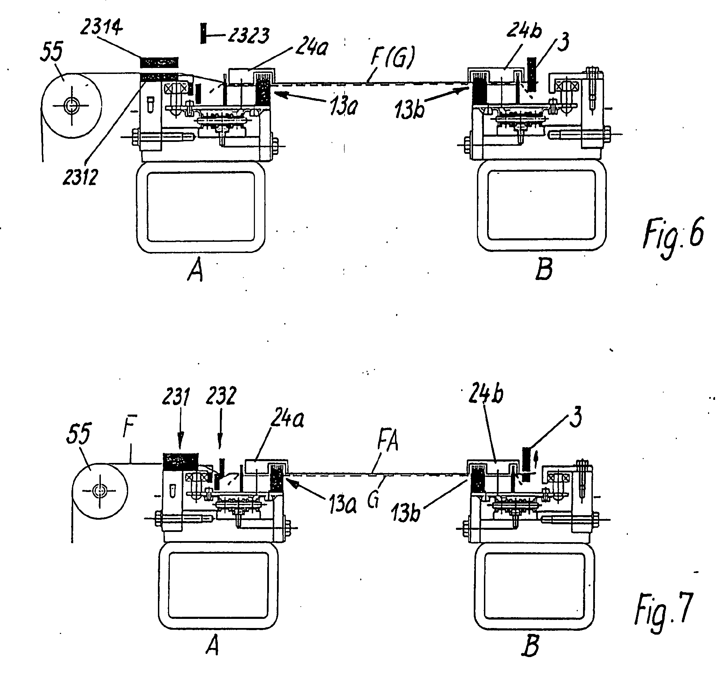

Die Fig. 6 zeigt die Position, in der der Greifer 3 seine Endstellung über der Transporteinrichtung B erreicht hat. Er senkt sich mit seiner Greifebene in die Ebene des Geleges G. Ihm folgen dabei die Einlegeprofile 24a und 24b. Die entsprechenden Abschnitte des Filamentscharenbandes F werden in die Fixierelemente 13a, 13b abgesenkt.

In der Folge (Fig. 7) schließt sich die Klemme 231 und die Schneidvorrichtung 232 trennt den Filamentscharenabschnitt FA vom Filamentscharenband F. Nahezu gleichzeitig erfolgt das Freigeben des bisher vorderen Endes des Filamentscharenabschn ittes FA durch das Öffnen des Greifers 3.

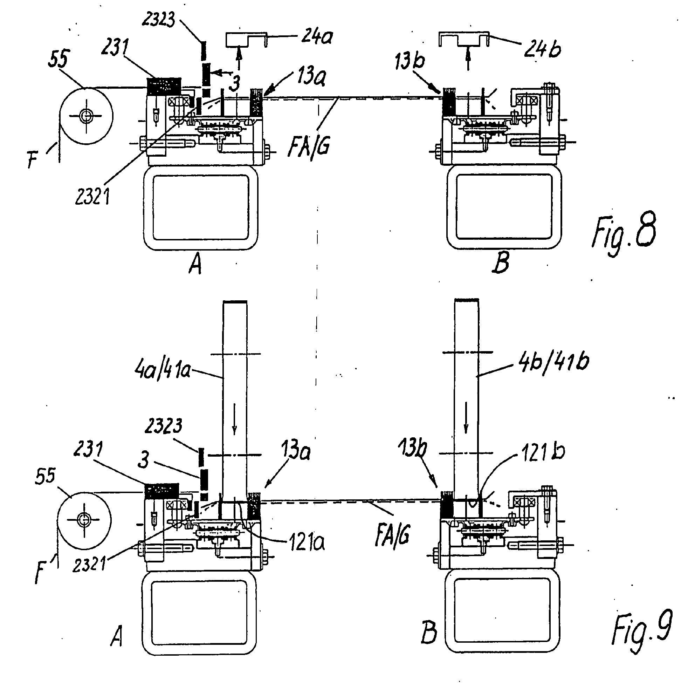

In Fig. 8 sehen wir zunächst den Abschluss des Legevorganges. Die Einlegeprofile 24a, 24b bewegen sich nach oben in ihre Bereitschaftsposition. Der Greifer 3 kehrt in seine Ausgangsposition über der unteren Schneide 2321 der Schneideinrichtung 232 zurück. Die Schneidvorrichtung 232 öffnet sich dabei so weit, dass sich der Greifer 3 zwischen den Schneiden 2323, 2321 frei bewegen kann.

Nach beendetem Legevorgang wird, wie in Fig. 9 gezeigt, das kombinierte Magnet-Stahlband 4a/41 ä bzw. 4b/41 b von oben kontinuierlich auf die Klemmfläche 121a bzw. 121b geführt (Vgl. auch Fig. 2). Die Magnetkraft unterstützt die Rückhaltewirkung der Fixierelemente 13a, 13b.

Dieser beschriebene Vorgang kann durch die Modifizierung bestimmter Bauelemente in positiver Weise unterstützt werden.

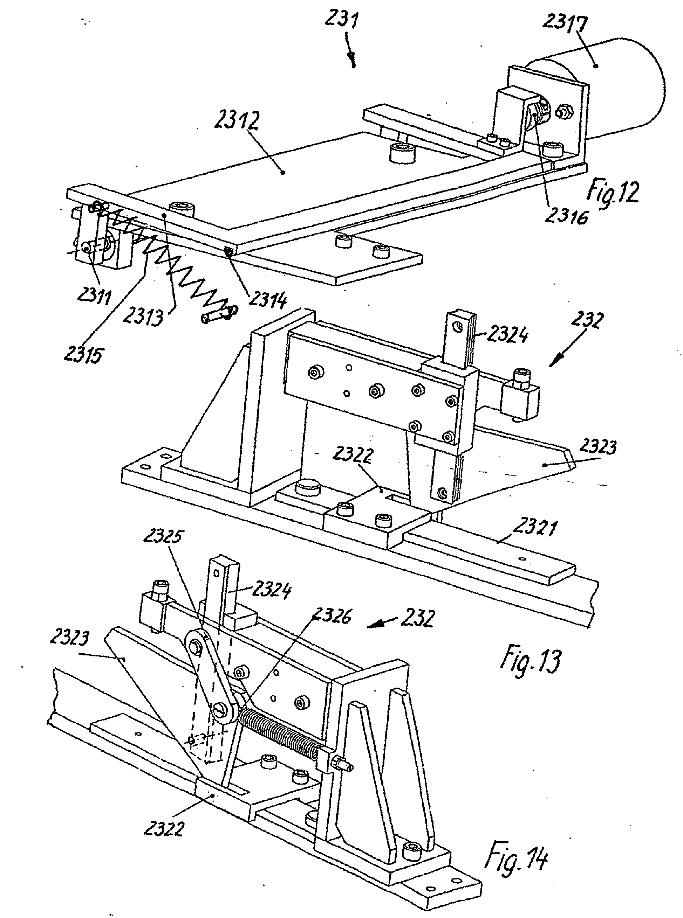

In Fig. 10 (Zeichnungsblatt 2/6) sind am Beispiel eines Greifers 3 Klemmfächen dargestellt, mit deren Hilfe die Haltekräfte für jedes einzelne Filament deutlich erhöht werden können.

Die untere Klemmfläche 31 ist wellenförmig ausgebildet. Darüber wird zunächst bei gehobenen oberen Klemmbacken 32 das Filamentscharenband F geführt. Der obere Klemmbacken 32 hat ein flexibles, hohles Klemmprofil 321, dessen Hohlraum mit einem einstellbarem Druck beaufschlagt werden kann. An der Unterseite dieses flexiblen Klemmprofiles 321 befindet sich ein schräg nach oben geneigtes Wellenprofil. Bei der Abwärtsbewegung des oberen Klemmbackes 32 greift zunächst der linke Zahn in das erste Wellental des Wellenprofiles an dem Klemmbacken 31 ein (Bild a)).

Nacheinander werden die weiteren Zähne oder Vorsprünge des elastischen Wellenprofiles in die Wellentäler des unteren, starren Profiles 31 eingebracht, ohne dass die von rechts nachgezogenen Teile des Filamentscharenbandes F in irgendeiner Weise behindert werden (Bild b)). Eine von links wirksame Zugkraft kann schließlich auch einzelne Filamente nicht aus der Klemmzone ziehen.

In Fig. 11 ist der Vorgang in zwei Phasen a) und b) in analoger Weise anhand des Einlegeprofiles 24' dargestellt. Der Klemmstößel 242 ist vertikal beweglich im Einlegeprofil 24' zwischen zwei begrenzenden Anschlägen geführt. Eine Feder 243 hält diesen Klemmstößel 242 elastisch in der untersten Position. Seine Klemmfläche 241 trifft auf die Klemmfläche 121b an der Fassung 12b bevor die seitlichen Einlegekanten des Einlegeprofiles 24b die Filamentscharen F vollständig über die kegeligen Spitzenabschnitte 1312 der Nadeln 131 nach unten führen. Der Kuliervorgang der schlangenfömigen Auslenkung zwischen den Nadeln 131 beginnt innen unter Reduzierung der Kräfte des jeweils nachgezogenen Fadens oder der nachgezogenen Filamente. Es ist sinnvoll diesen Kuliervorgang so zu gestalten, dass Fasern oder Filamente aus dem Raum des Geleges G gezogen werden. Dieser Vorgang trägt zur Erhöhung der Spannung der Filamente in diesem Bereich bei.

In Fig. 12 (Zeichnungsblatt 6/6) ist die Klemmvorrichtung 231 der Klemm-Schneid-Vorrichtung 23 in einer bevorzugten Form dargestellt. Die untere, feste Klemmplatte 2312 ist mit dem Gestell verbunden. Der Klemmhebel 2313 ist um die Schwenkachse 2311 schwenkbar gelagert. Die Feder 2315 hält den Klemmkörper 2314 unter Vorspannung an der Klemmplatte 2312. Das Liften der Klemme 231 bewirkt der Rotationsmagnet 2317 über den Exzenter 2316.

Die Schneidvorrichtung 232 ist in den Figuren 13 und 14 aus zwei entgegengesetzten Richtungen gesehen dargestellt. Die bewegliche Schneide 2323 wird im Führungsstück 2322 derart seitlich geführt, dass sie regelmäßig mit gleicher seitlicher Kraft an der feststehenden Schneide 2321 gehalten wird. Die Hubbewegung der Schneide 2323 wird über den Antriebsstößel 2324 ausgelöst.

Aus Fig. 14 ist die Art der Bewegungsübertragung auf die bewegliche Schneide 2323 besser zu erkennen. Beim Schneiden oder Trennen von hochfesten Kohlenstofffilamenten kommt es darauf an, den Trennprozess sehr schnell und zuverlässig auszuführen. Wegen der Notwendigkeit, den Greifer 3 zwischen den Schneiden 2323, 2321 der Schneidvorrichtung 232 zu führen, muss die bewegliche Schneide 2323 einen großen Hub in sehr kurzer Zeit ausführen.

Zur Hubbewegung der Schneide 2323 wird deshalb während des Trennhubes zusätzlich eine Schwenkbewegung auf die Schneide 2323 überlagert. Der senkrecht geführte Antriebsstößel 2324 ist zu diesem Zweck gelenkig mit der Schneide 2323 verbunden. Die Schwinge 2325 hat ein gestellfestes Lager. Ihr zweites Lager befindet sich an der Schneide 2323 im Abstand vom Gelenk des Antriebsstößels 2324. Die Schneide 2323 wird damit zur Koppel eines Viergelenkes und führt neben der vertikalen Hubbewegung noch eine Schwenkbewegung aus. Die Feder 2326 unterstützt diesen Vorgang.

Mit dieser Vorrichtung wird der über den Bandquerschnitt fortlaufende Schneidvorgang bei gleichzeitiger, schneller Überwindung des für den Greifer 3 notwendigen Freiraumes in sehr kurzer Zeit und bei niedrigem Energieaufwand möglich.

### Bezugszeichenliste

- A, B: Transporteinrichtungen
- .... a, b: Teile der Transporteinrichtungen A, B
- F: Filamentschar, bandförmig
- FA: Flamentscharenabschnitt
- G: Gelege
- G1: Schicht, (1.)
- G2: Schicht, (2.)
- L1, L2: Legeanordnung
- V: Verbindungsstation
- t: Nadelteilung
- d: Schaftdurchmesser
- α: Kegelwinkel

- 1: Transportkette
- 11: Grundplatte
- 12: Fassung
- 121a, 121b: Klemmflächen
- 13, 13a, 13b: Fixierelemente
- 13', 13": Gruppen von Nadelreihen (der Fixierelemente)
- 131: Nadeln
- 1311: Schaft
- 1312: Spitzenabschnitt, kegelig
- 14: Stützrolle

- 2: Kettenführung
- 21: Führungsschienen
- 22: Stützschiene

- 23: Klemm-Schneid-Vorrichtung
- 231: Klemme
- 2311: Schwenkachse
- 2312: Klemmplatte, fest
- 2313: Klemmhebel
- 2314: Klemmkörper
- 2315: Feder
- 2316: Exzenter
- 2317: Drehmagnet

- 232: Schneideinrichtung
- 2321: Schneide, fest
- 2322: Führungsstück
- 2323: Schneide, beweglich
- 2324: Antriebstößel
- 2325: Schwinge
- 2326: Feder

- 24a, 24b: Einlegeprofil
- 24': Einlegeprofil
- 241, 241': Klemmfläche
- 242: Klemmstößel
- 243: Feder

- 3: Greifer (des Legers)
- 31: unterer Klemmbacken
- 32: oberer Klemmbacken
- 321: Klemmprofil

- 4a, 4a': Magnetband
- 4b, 4b': Magnetband
- 41a, 41a': Stahlband
- 41b, 41b': Stahlband

- 5: Bandzuführung
- 51: Spule / Speicher
- 52: Bremse
- 53: Lieferwerk
- 54: Speicherrolle
- 55: Führungsrolle

- 6: Stützband

## Patentansprüche

1. Verfahren zum Vorlegen und Fixieren von bandförmigen Filamentscharen auf zwei zueinander parallelen Transporteinrichtungen (A, B) für die Herstellung eines uni- oder multiaxialen Geleges (G), das aus mindestens einer Schicht (G1, G2), in einer Richtung gestreckt ausgerichteter und in einer Ebene nebeneinander angeordneter, bandförmiger, voneinander getrennter Filamentscharenabschnitte (FA) besteht,
wobei die bandförmigen Filamentscharen (F) oder Filamentscharenabschnitte (FA) an den zu einer Verbindungsstation (V) führenden Transporteinrichtungen (A, B) in Fixierelementen (13a, 13b), die aus in mehreren Reihen garniturartig dicht gestaffelt positionierten, mit kegeligen Spitzenabschnitten (1312) nach oben weisenden Nadeln (131) bestehen, mittels Einlegeprofilen (24a, 24b) absenkend fixiert werden,
wobei die Filamentscharen (F) oder Filamentscharenabschnitte (FA) während des absenkenden Fixierens in die Fixierelemente zunächst durch die Spitzen der Nadeln (131) der Garnitur in strangförmige Abschnitte aufgeteilt, die strangförmigen Abschnitte mittels der kegeligen Spitzenabschnitte (1312) der Nadeln (131) schlangenförmig seitlich ausgelenkt und schließlich in den Spalten zwischen den Schäften (1311) der Nadeln (131) geklemmt werden.

2. Verfahren nach Anspruch 1, **dadurch gekennzeichnet,**
**dass** die von einem Speicher (Spule 51) gezogenen, bandförmigen Filamentscharen (F) mit Hilfe eines Greifers (3) eines Legewagens
- von einer ersten ortsfesten sich öffnenden Klemmvorrichtung (231) aus
- zunächst über eine ortsfeste Schneidvorrichtung (232) und
- dann über die Fixierelemente (13a, 13b) der beiden Transporteinrichtungen (A, B) vorlegend geführt werden,
**dass** das mit dem Speicher (Spule 51) verbundene Filamentscharenband (F) unter Ausbildung eines Filamentscharenabschnittes (FA)
- nach dem Schließen der ersten Klemmvorrichtung (231) und
- nach dem Absenken des Filamentscharenabschnittes (FA) in die Fixierelemente (13a, 13b)
- unmittelbar neben den Fixierelementen (13a) der dem Speicher am nächsten liegenden Transporteinrichtung (A) mittels der Schneidvorrichtung (232) getrennt wird und
**dass** das vorlaufende Ende des Filamentscharenabschnittes (FA) schließlich von dem Greifer (3) freigegeben wird.

3. Verfahren nach Anspruch 1 und 2, **dadurch gekennzeichnet,**
**dass** das herzustellende Gelege (G) mindestens zwei Schichten (G1, G2) aufweist,
**dass** der Vorgang für das Vorlegen und Fixieren der unterschiedlich gerichteten Filamentscharen (F) örtlich und zeitlich versetzt in mindestens einer weiteren Legeanordnung (L2) unter Nutzung der selben Fixierelemente (13a, 13b) an den Transporteinrichtungen (A, B) derart ausgeführt wird, dass alle Schichten (G1, G2) des Geleges (G) übereinander, zwischen den Schäften der Nadeln (131) klemmend und auslenkend fixiert der Verbindungsstation (V) zugeführt werden.

4. Verfahren nach einem der Ansprüche 1 bis 3, **dadurch gekennzeichnet,**
**dass** die Filamentscharen (F) oder die Filamentscharenabschnitte (FA) zusätzlich über Klemmflächen (121a, 121b), die den Fixierelementen (13a, 13b) an den Transporteinrichtungen (A, B) benachbart sind, vorlegend geführt werden,
**dass** mit dem Beenden des Einlegevorganges durch die Einlegeprofile (24a, 24b) die Filamentscharenabschnitte (FA) zwischen den Klemmflächen (121a, 121b) an den Transporteinrichtungen (A, B) und den Klemmflächen (241a, 241b) der Einlegeprofile (24a, 24b) mindestens während des Trenn- und Lösevorganges geklemmt werden und
**dass** die nachfolgend, von den Fixierelementen (13a, 13b) der Transporteinrichtungen (A, B) geführten Filamentscharenabschnitte (FA) mittels kontinuierlich, von oben an sie herangeführter Magnetbänder (4a, 4a'; 4b, 4b') an die Klemmflächen (121a, 121b) der Transporteinrichtungen (A, B) gedrückt werden.

5. Verfahren nach Anspruch 4, **dadurch gekennzeichnet,**
**dass** gleichzeitig mit den Magnetbändern (4a; 4b) jeweils ein mit diesem verbundenens, flexibles Stahlband (41a; 41b) zugeführt wird und
**dass** auf dieses Stahlband (41a; 41b) direkt oder auf die in einem Folgeschritt zugeführten Filamentscharenabschn itte (FA) einer weiteren Schicht (G2) ein weiteres Magnetband (4a'; 4b') oberhalb der Klemmflächen (121a, 121b) an den Transporteinrichtungen (A, B) aufgelegt wird.

6. Verfahren nach Anspruch 1 oder 2, **dadurch gekennzeichnet,**
**dass** die Filamentscharenabschnitte (FA) zwischen den Fixierelementen (13a, 13b) der beiden Transporteinrichtungen (A, B) in der Ebene der Klemmflächen (121a, 121b) auf dem oberen Trum eines synchron zu den Transporteinrichtungen (A, B) bewegbaren Stützbandes (6) bis nahe an die Verbindungsstation (V) geführt werden.

7. Vorrichtung zum Verlegen und Fixieren von bandförmigen Filamentscharenabschnitten (FA) bei der Herstellung von uni- oder multiaxialen Gelegen (G) mit einer oder mehreren Schichten (G1, G2), die an einer Verbindungsstation (V) - zum Zwecke der besseren Handhabung bei der späteren Weiterverarbeitung
- vorverfestigt werden, bestehend ausmindestens zwei, parallel zueinander zur Verbindungsstation (V) fördernden Transporteinrichtungen (A, B) mit Fixierelementen (13) für die Filamentscharenabschnitte (FA),
aus mindestens einem Leger (L1, L2) pro Schicht (G1, G2) des Geleges (G), der mit einem steuerbaren Greifer (3) für das vordere Ende der bandförmigen Filamentscharen (F) ausgestattet ist und in wechselnden Richtungen entlang einer Führungsbahn bewegbar ist und dessen Führungsbahn die Bewegungsbahn der Fixierelemente (13) der Transporteinrichtungen (A, B) oberhalb kreuzt, und aus einer Klemm-Schneid-Vorrichtung (23) im Bereich der Führungsbahn des Legers (3), nahe der Transporteinrichtung (A), die den Speichern (Spulen 51) für die Filamentscharen (F) zugewandt ist,
zur Ausführung des Verfahrens nach den Ansprüchen 1 oder 2,
**dadurch gekennzeichnet,**
**dass** die Fixierelemente (13a, 13b) der Transporteinrichtungen (A, B) mit mehreren Reihen garniturartig dicht gestaffelt angeordneten, mit ihren Spitzen nach oben gerichteten Nadeln (131) ausgestattet sind,
**dass** die Nadeln (131) zwischen der Spitze und ihrem Schaft (1311) mit einem kegeligen Spitzenabschnitt (1312) versehen sind, dessen Kegelwinkel (α) nahe dem Übergang zum Schaft kleiner ist als 6°,
**dass** den Transporteinrichtungen (A, B) - im Bereich der Kreuzungsstellen mit der Führungsbahn eines Legers - Steuer- und Führungselemente für die Einlegeprofile (24a, 24b) zugeordnet sind und dass der dem Speicher (Spule 51) für die Filamentscharen (F) eines Legers (Greifers 3) zugewandten Transporteinrichtung (A) im Bereich dieses Legers eine steuerbare Klemm-Schneid-Vorrichtung (23) zugeordnet ist.

8. Vorrichtung nach Anspruch 7, **dadurch gekennzeichnet,**
**dass** die Teilungsabstände (t) der Nadeln (131) innerhalb der Nadelreihen und zwischen den Nadelreihen in dem Bereich von t = 0,7 mm und t = 1,5 mm betragen und das Verhältnis zwischen dem Schaftdurchmesser (d) der Nadeln (131) und ihrem Teilungsabstand (t) zwischen 0,55 und 0,75 gewählt ist.

9. Vorrichtung nach Anspruch 7, **dadurch gekennzeichnet,**
**dass** die Nadeln (131) der garniturartig angeordneten Fixierelemente auf 5 bis 10 sich in Transportrichtung ersteckende Nadelreihen verteilt sind und
**dass** die Nadelreihen auf eine oder mehrere, voneinander beabstandete Gruppen (13', 13") verteilt sind.

10. Vorrichtung nach Anspruch 7, **dadurch gekennzeichnet,**
**dass** den Gruppen (13', 13") der Nadelreihen benachbart, überwiegend nach oben gerichtete Klemmflächen (121a, 121b) an den Transporteinrichtungen (A, B) zugeordnet sind,
**dass** oberhalb der Bewegungsbahnen der Klemmflächen (121a, 121b) an den Transporteinrichtungen (A, B), in Bewegungsrichtung benachbart zu jeder Führungsbahn des Legers (L1, L2) Zuführungen für ein Magnetband (4a, 4a'; 4b, 4b') mit einer Haltekraft von mindestens 0,4 N/cm² zugeordnet sind und
da**s**s das Magnetband (4a, 4a'; 4b, 4b') an einem flexiblen Stahlband (41a, 41a'; 41b, 41b') derart gehalten ist, dass sich das Magnetband (4a, 4a'; 4b, 4b') in seiner Position neben den Fixierelementen (13a, 13b) zwischen den Klemmflächen (121a, 121b) der Transporteinrichtungen (A, B) und dem Stahlband (41a, 41a'; 41b, 41b') befindet.

11. Vorrichtung nach Anspruch 7, **dadurch gekennzeichnet,**
**dass** die Klemme (231) der Klemm-Schneid-Vorrichtung (23) und/oder der Greifer (3) und/oder der Einlegeprofile (24a, 24b) an einer ihrer Klemmflächen (31, 321) mit quer zur Längsrichtung der Filamentscharenabschnitte (FA) ausgerichteten Wellenprofilen ausgestattet ist und
**dass** den Wellentälern nacheinander aktivierbare Klemmelemente zugeordnet sind.

## Claims

1. Method for placing and fixing band-shaped filament groups onto two conveying devices (A, B), parallel to one another, to produce a uniaxial or multiaxial non-woven fabric (G), consisting of at least one layer (G1, G2) of band-shaped filament group sections (FA), aligned stretched in one direction, arranged on one plane next to one another and separated from one another, wherein the band-shaped filament groups (F) or filament group sections (FA) are fixed, lowered by means of insertion profiles (24a, 24b), on the conveying devices (A, B) leading to a bonding station (V) in fixing elements (13a, 13b), consisting of needles (131), positioned in a plurality of rows, tightly staggered in a clothing-like manner and pointing upwards with conical pointed sections (1312), wherein the filament groups (F) or filament group sections (FA) during the lowering fixing into the fixing elements are first divided by the points of the needles (131) of the clothing into strand-shaped sections, the strand-shaped sections are deflected laterally by means of the conical pointed sections (1312) of the needles (131) in a meandering shape and are finally clamped in the gaps between the shanks (1311) of the needles (131).

2. Method according to claim 1, **characterised in that** the band-shaped filament groups (F) drawn from a store (spool 51) are first guided, while being placed, with the aid of a gripper (3) of a placing carriage from a first stationary opening clamping device (232) over a stationary cutting device (232) and then over the fixing elements (13a, 13b) of the two conveying devices (A, B), **in that** the filament group band (F) connected to the store (spool 51) is separated by the cutting device (232) immediately next to the fixing elements (13a) of the conveying device (A) located closest to the store, forming a filament group section (FA), after the first clamping device (231) has been closed and after the filament group section (FA) has been lowered into the fixing elements (13a, 13b), and **in that** the leading end of the filament group section (FA) is finally released by the gripper (3).

3. Method according to claim 1 and claim 2, **characterised in that** the non-woven fabric (G) to be produced has at least two layers (G1, G2) and **in that** the process for placing and fixing the differently directed filament groups (F) is carried out offset in location and time in at least one further placing arrangement (L2), using the same fixing elements (13a, 13b) on the conveying devices (A, B) in such a way that all the layers (G1, G2) of the non-woven fabric (G) are guided to the bonding station (V), fixed by clamping and deflecting on top of one another, between the shanks of the needles (131).

4. Method according to any one of claims 1 to 3, **characterised in that** the filament groups (F) or the filament group sections (FA) are additionally guided, while being placed, over clamping faces (121a, 121b) which are adjacent to the fixing elements (13a, 13b) on the conveying devices (A, B), **in that** on completion of the insertion process by the insertion profiles (24a, 24b) the filament group sections (FA) are clamped between the clamping faces (121a, 121b) on the conveying devices (A, B) and the clamping faces (241a, 241b) of the insertion profiles (24a, 24b) at least during the separation and detaching process and **in that** the filament group sections (FA) subsequently guided by the fixing elements (13a, 13b) of the conveying devices (A, B) are pressed by means of magnetic bands (4a, 4a'; 4b, 4b') fed to them continuously from above against the clamping faces (121a, 121b) of the conveying devices (A, B).

5. Method according to claim 4, **characterised in that** in each case a flexible steel band (41a; 41b) connected to the magnetic bands (4a, 4b) is fed simultaneously thereto and **in that** a further magnetic band (4a'; 4b') is placed directly onto this steel band (41a; 41b) or onto the filament group sections (FA) of a further layer (G2) fed in a subsequent step above the clamping faces (121a, 121b) on the conveying devices (A, B).

6. Method according to either claim 1 or claim 2, **characterised in that** the filament group sections (FA) are guided between the fixing elements (13a, 13b) of the two conveying devices (A, B) in the plane of the clamping faces (121a, 121b) on the upper branch of a supporting band (6) movable synchronously to the conveying devices (A, B) until they are close to the bonding station (V).

7. Device for laying and fixing band-shaped filament group sections (FA) in the production of uniaxial or multiaxial non-woven fabrics (G) with one or more layers (G1, G2), which are pre-consolidated at a bonding station (V) - for the purpose of better handling during later further processing - consisting of at least two conveying devices (A, B), delivering to the bonding station (V) parallel to one another, with fixing elements (13) for the filament group sections (FA), at least one placer (L1, L2) per layer (G1, G2) of the non-woven fabric (G), which is equipped with a controllable gripper (3) for the front end of the band-shaped filament groups (F) and is movable in alternating directions along a guide path and the guide path of which crosses the movement path of the fixing elements (13) of the conveying devices (A, B) at the top, and a clamping and cutting device (23) in the region of the guide path of the placer (3), near the conveying device (A) which is facing the stores (spools 51) for the filament groups (F), for carrying out the method according to claims 1 or 2, **characterised in that** the fixing elements (13a, 13b) of the conveying devices (A, B) are equipped with a plurality of rows of needles (131) arranged closely staggered in a clothing-like manner, with their points directed upwards, **in that** the needles (131) are provided between the point and their shank (1311) with a conical pointed section (1312), the conical angle (α) of which near the transition to the shank is less than 6 °, **in that** control and guide elements for the insertion profiles (24a, 24b) are allocated to the conveying devices (A, B) - in the region of the crossing points with the guide path of a placer - and **in that** allocated to conveying device (A) facing the store (spool 51) for the filament groups (F) of a placer (gripper 3) in the region of this placer is a controllable clamping and cutting device (23).

8. Device according to claim 7, **characterised in that** the dividing spaces (t) of the needles (131) within the rows of needles and between the rows of needles are in the region of t = 0.7 mm and t = 1.5 mm and the ratio between the shank diameter (d) of the needles (131) and their dividing space (t) is chosen between 0.55 and 0.75.

9. Device according to claim 7, **characterised in that** the needles (131) of the fixing elements arranged in a clothing-like manner are divided over 5 to 10 rows of needles extending in the conveying direction and **in that** the rows of needles are divided over one or more groups (13', 13") spaced apart from one another.

10. Device according to claim 7, **characterised in that** adjacent to the groups (13', 13") of rows of needles, clamping faces (121a, 121b), predominantly directed upwards, are allocated on the conveying devices (A, B), **in that** above the movement paths of the clamping faces (121a, 121b) on the conveying devices (A, B) in the movement direction adjacent to each guide path of the placer (L1, L2), feeds for a magnetic band (4a, 4a'; 4b, 4b') are allocated with a holding force of at least 0.4 N/cm² and **in that** the magnetic band (4a, 4a'; 4b, 4b') is held on a flexible steel band (41a, 41a'; 41b, 41b') in such a way that the magnetic band (4a, 4a'; 4b, 4b') is located in its position next to the fixing elements (13a, 13b) between the clamping faces (121a, 121b) of the conveying devices (A, B) and the steel band (41a, 41a'; 41b, 41b').

11. Device according to claim 7, **characterised in that** the clamp (231) of the clamping and cutting device (23) and/or the gripper (3) and/or the insertion profiles (24a, 24b) is/are equipped on one of their clamping faces (31, 321) with wave profiles aligned transversely to the longitudinal direction of the filament group sections (FA) and **in that** clamping elements activatable in succession are allocated to the wave troughs.

## Revendications

1. Procédé de pose et de fixation de bandes de filaments rectilignes sur deux installations de transport parallèles (A, B) pour la fabrication d'un tissu non tissé monoaxial ou multiaxial (G) qui comporte au moins une couche (G1, G2) de sections de bandes de filaments rectilignes (FA) séparées les unes des autres, disposées à un niveau l'une à côté de l'autre et étendues suivant une direction,
les bandes de filaments (F) ou sections de bandes de filaments (FA) rectilignes étant fixées en inclinaison vers le bas au moyen de profilés d'insertion (24a, 24b), aux installations de transport (A, B) conduisant à une station de jonction (V), dans des éléments de fixation (13a, 13b) qui sont composés d'aiguilles (131) orientées vers le haut, avec des sections de pointes coniques (1312), et positionnées en échelons denses sur plusieurs rangées en forme de rames,
les bandes de filaments (F) ou sections de bandes de filaments (FA) rectilignes, pendant la fixation en inclinaison vers le bas dans les éléments de fixation, étant ensuite séparées en sections en forme de cordons par les pointes des aiguilles (131) de la rame, les sections en forme de cordons étant déviées latéralement en files au moyen des sections de pointes coniques (1312) des aiguilles (131), et étant finalement serrées dans les fentes entre les talons (1311) des aiguilles (131).

2. Procédé selon la revendication 1, **caractérisé en ce que**
les bandes de filaments rectilignes (F), qui sont tirées par un accumulateur (bobine 51), sont guidées vers l'avant au moyen d'un crochet rotatif (3) d'un chariot de pliage
- à partir d'un premier dispositif de dispositif de serrage (231) fixe qui s'ouvre,
- puis à travers un dispositif coupeur fixe (232), et
- enfin à travers les éléments de fixation (13a, 13b) des deux installations de transport (A, B),
la bande de filaments rectilignes (F) reliée à l'accumulateur (bobine 51) est séparée, au moyen du dispositif coupeur fixe (232), en formant une section de bandes de filaments (FA),
- après la fermeture du premier dispositif de serrage (231), et
- après l'abaissement de la section de bandes de filaments (FA) dans les éléments de fixation (13a, 13b),
- immédiatement à côté de l'élément de fixation (13a) de l'installation de transport (A) suivante la plus proche de l'accumulateur, et
l'extrémité défilant en avant des sections de bandes de filaments (FA) est finalement relâchée par le crochet rotatif (3).

3. Procédé selon la revendication 1 et 2, **caractérisé en ce que**
le tissu non tissé (G) à fabriquer comporte au moins deux couches (G1, G2), le mécanisme de pose et de fixation des bandes de filaments rectilignes (F) alignées différemment, décalée localement et chronologiquement dans au moins une autre disposition de pose (L2) en utilisant les mêmes éléments de fixation (13a, 13b) sur les installations de transport (A, B), est conçu de manière à ce que toutes les couches (G1, G2) du tissu non tissé (G) soient alimentées l'une au-dessus de l'autre, entre les talons des aiguilles (131) de la station de jonction (V), fixées en position serrée et déviée.

4. Procédé selon les revendications 1 à 3, **caractérisé en ce que**
les bandes de filaments (F) ou les sections de bandes de filaments (FA) sont guidées vers l'avant à travers des surfaces de serrage (121a, 121b), qui sont proches des éléments de fixation (13a, 13b) sur les installations de transport en (A; B),
les sections de bandes de filaments (FA) sont serrées par les extrémités du mécanisme d'insertion par l'intermédiaire des profilés d'insertion (24a, 24b), entre les surfaces de serrage (121a, 121b) sur les installations de transport (A, B) et les surfaces de serrage (241a, 241b) des profilés d'insertion (24a, 24b), tout au moins pendant le processus de séparation et de relâchement, et
les sections de bandes de filaments (FA), consécutivement guidées par les éléments de fixation (13a, 13b) des installations de transport (A, B), sont compressées sur les surfaces de serrage (121a, 121b) des installations de transport (A, B) au moyen de bandes magnétiques (4a, 4a'; 4b, 4b') conduites jusqu'à elles par le haut.

5. Procédé selon la revendication 4, **caractérisé en ce que**
en même temps que les bandes magnétiques (4a ; 4b), une bande d'acier flexible (41a ; 41b) reliée à chacune de ces dernières, est amenée, et
une autre bande magnétique (4a' ; 4b') située au-dessus des surfaces de serrage (121a, 121b) sur les installations de transport (A, B) est posée directement sur cette bande d'acier (41a ; 41b) ou sur des sections de bandes de filaments (FA) d'une autre couche (G2) qui sont amenées dans une phase consécutive.

6. Procédé selon la revendication 1 ou 2, **caractérisé en ce que**
les sections de bandes de filaments (FA) sont guidées jusqu'à proximité de la station de jonction (V), entre les éléments de fixation (13a, 13b) des deux installations de transport (A, B) au niveau des surfaces de serrage (121a, 121b) sur le compartiment supérieur d'une bande d'appui (6), dont la mobilité est synchrone par rapport aux installations de transport (A, B).

7. Dispositif de pose et de fixation de sections de bandes de filaments rectilignes (FA) pour la fabrication d'un tissu non tissé monoaxial ou multiaxial (G) qui comporte une ou plusieurs couches (G1, G2), qui sont préalablement fixées à une station de jonction (V), avec l'objectif d'améliorer la manipulation lors de la transformation ultérieure, comportant :
au moins deux installations de transport (A, B) parallèles l'une à l'autre assurant le transport jusqu'à la station de jonction (V), avec des éléments de fixation (13) pour les sections de bandes de filaments (FA),
au moins un dispositif de pliage (L1, L2) pour chaque couche (G1, G2) de tissu non tissé (G), qui est pourvu d'un crochet rotatif (3) pouvant être commandé pour l'extrémité avant des bandes de filaments rectilignes (F), et qui est mobile le long d'une glissière dans des directions alternées, et dont la glissière croise la voie de déplacement des éléments de fixation (13) des installations de transport (A, B) par le dessus, et d'un dispositif de serrage et de découpe (23) au niveau de la glissière du dispositif de pliage (3), à proximité de l'installation de transport (A), qui fait face aux accumulateurs (bobines 51) pour les bandes de filaments (F), pour l'exécution du procédé selon les revendications 1 ou 2,
**caractérisé en ce que** les éléments de fixation (13a, 13b) des installations de transport (A, B) sont garnis de plusieurs rangées d'aiguilles (131), dont la pointe est dirigée vers le haut et qui sont positionnées en échelons denses en forme de rames,
**en ce que** les aiguilles (131) sont pourvues entre la pointe et leur talon (1311) d'une section de pointes coniques (1312), dont l'angle de cône (α) proche du passage vers le talon est inférieur à 6°,
**en ce que** des éléments de commande et de guidage pour les profilés d'insertion (24a, 24b) sont associés aux installations de transport (A, B), au niveau des zones de croisement avec la glissière d'un crochet rotatif, et
**en ce qu'**un dispositif de serrage et de découpe (23) pouvant être commandé est affecté à l'installation de transport (A), orientée vers l'accumulateur (bobine 51) pour les bandes de filaments rectilignes (F) d'un dispositif de pliage (crochet rotatif 3), et situé au niveau de ce dispositif de pliage.

8. Dispositif selon la revendication 7, **caractérisé en ce que**
les distances de séparation (t) des aiguilles (131) à l'intérieur des rangées d'aiguilles, et entre les rangées d'aiguilles sont de l'ordre de t = 0,7 mm et t = 1,5 mm et que le rapport entre le diamètre du talon (d) des aiguilles (131) et leurs distances de séparation (t) est choisi entre 0,55 et 0,75.

9. Dispositif selon la revendication 7, **caractérisé en ce que**
les aiguilles (131) des éléments de fixation disposées en rames sont réparties en 5 à 10 rangées d'aiguilles s'étendant dans le sens du transport et
les rangées d'aiguilles sont réparties en un ou plusieurs groupes (13', 13") séparés les uns des autres.

10. Dispositif selon la revendication 7, **caractérisé en ce que**
des surfaces de serrage (121a, 121b), sur les installations de transport (A, B), disposées à proximité et de manière prépondérante vers le haut, sont affectées aux groupes (13', 13") des rangées d'aiguilles,
des alimentations pour une bande magnétique (4a, 4a' ; 4b, 4b') avec une résistance d'au moins 0,4 N/cm² sont affectées, au dessus des voies de déplacement, aux surfaces de serrage (121a, 121b) sur les installations de transport (A, B), dans le sens du déplacement, à proximité de chaque glissière du dispositif de pliage (L1, L2), et
la bande magnétique (4a, 4a' ; 4b, 4b') est maintenue sur une bande d'acier flexible (41a, 41a' ; 41b, 41b') de telle sorte que la bande magnétique (4a, 4a' ; 4b, 4b') se trouve, dans sa position à côté des éléments de fixation (13a, 13b), entre les surfaces de serrage (121a, 121b) des installations de transport (A, B) et la bande d'acier (41a, 41a' ; 41b, 41b').

11. Dispositif selon la revendication 7, **caractérisé en ce que**
la pince (231) du dispositif de serrage et de découpe (23) et/ou des crochets rotatifs (3) et/ou des profilés d'insertion (24a, 24b) est pourvue, au niveau d'une de ses surfaces de serrage (31, 321), de profilés ondulés disposés perpendiculairement au sens longitudinal des sections de bandes de filaments (FA), et
des éléments de serrage pouvant être activés les uns après les autres sont associés aux profilés ondulés.
